Europäisches Patentamt

European Patent Office

Office européen des brevets

(19)

(11) Numéro de publication : **0 372 041 B1**

(12) ## FASCICULE DE BREVET EUROPEEN

(45) Date de publication du fascicule du brevet :
**26.08.92 Bulletin 92/35**

(51) Int. Cl.⁵ : **F16L 11/16**

(21) Numéro de dépôt : **89905705.3**

(22) Date de dépôt : **02.05.89**

(86) Numéro de dépôt international :
**PCT/FR89/00214**

(87) Numéro de publication internationale :
**WO 89/11057 16.11.89 Gazette 89/27**

(54) **TUBE FLEXIBLE COMPORTANT UN ALLIAGE D'ALUMINIUM.**

(30) Priorité : **09.05.88 FR 8806242**

(43) Date de publication de la demande :
**13.06.90 Bulletin 90/24**

(45) Mention de la délivrance du brevet :
**26.08.92 Bulletin 92/35**

(84) Etats contractants désignés :
**BE DE FR GB IT NL**

(56) Documents cités :
**EP-A- 0 045 632
EP-A- 0 147 288
FR-A- 2 467 347
GB-A- 2 163 514
K.R. Van Horn: "Aluminium", vol. 1,
"Properties, Physical Metallurgy and Phase
Diagrams", 1967, American Society for
Metals,(Metals Park, Ohio, US)J.A. Nock, Jr.:
"Properties of commercial wrought alloys",
pages 303, 304, 306, chapter 9, see tables**

(73) Titulaire : **INSTITUT FRANCAIS DU PETROLE
4, Avenue de Bois Préau
F-92502 Rueil-Malmaison (FR)**
Titulaire : **COFLEXIP
23 Avenue de Neuilly
F-75116 Paris (FR)**

(72) Inventeur : **SUGIER, André
34, avenue de la Chataigneraie
F-92500 Rueil Malmaison (FR)**
Inventeur : **MALLEN HERRERO, José
29, boulevard des Batignolles
F-75008 Paris (FR)**

(74) Mandataire : **Andreeff, François
INSTITUT FRANCAIS DU PETROLE 4, avenue
de Bois-Préau
F-92502 Rueil-Malmaison (FR)**

EP 0 372 041 B1

Jouve, 18, rue Saint-Denis, 75001 PARIS

## Description

La présente invention concerne une nouvelle structure de conduite flexible présentant un allégement de poids relativement aux tubes de l'art antérieur tout en conservant des performances notamment mécaniques correctes.

L'invention s'applique, notamment, à la réalisation de conduites flexibles de transport de fluides sous pression, tels que de l'eau ou des hydrocarbures.

Pour de nombreuses applications de telles conduites, il est souvent souhaitable et parfois nécessaire de disposer de flexibles allégés, notamment pour les applications en mer profonde.

Les flexibles selon certaines variantes de réalisation suivant la présente invention peuvent être, notamment, posés en mer à de grandes profondeurs d'eau.

En effet, l'un des problèmes rencontré lors de la pose de tels flexibles en grande profondeur d'eau, résulte du poids du flexible suspendu.

La contrainte dans le flexible résultant du poids, augmente au fur et à mesure que l'on se rapproche de la surface de l'eau en partant du fond.

Ainsi, c'est au niveau des moyens de maintien du flexible en surface que l'on rencontre les plus grandes contraintes dans le flexible.

L'un des moyens pour réduire cette contrainte, est d'alléger le poids du flexible tout en maintenant sensiblement ses performances mécaniques, c'est ce que propose la présente invention.

Les flexibles auxquels s'applique notamment la présente invention, peuvent comprendre au moins l'un des quatre composants suivants, dont chacun peut comporter un ou plusieurs éléments allongés, tel un profilé, un câble, un fils ou un feuillard :

- une carcasse interne constituée d'un feuillard agrafé ou de fils agrafés ou emboîtés,
- une armure de renfort,
- une voûte de renfort comportant un élément allongé profilé, et
- une carcasse externe constituée d'un feuillard ou de fils agrafés ou emboîtés.

Bien entendu, de préférence, ces éléments allongés peuvent être enroulés hélicoïdalement pour former le tube flexible que ce soit avec ou sans gaine plastique.

La présente invention concerne, d'une façon générale, tous les flexibles comportant une armature métallique qui sont utilisés dans des conditions telles que le poids de cette armature crée des difficultés.

Plus spécifiquement, les flexibles dont les conditions d'utilisation sont limitées par la densité du matériau métallurgique constituant les éléments d'armature, généralement de l'acier, du fait que, si on augmente la section de ces éléments dans le but d'augmenter la résistance mécanique du flexible, il en résulte une augmentation du poids du flexible, et, par conséquent, une augmentation des efforts appliqués au flexible et en fonction desquels sont dimensionnés les éléments constituant l'armature.

C'est ainsi qu'une application extrêmement intéressante pour l'invention concerne les canalisations flexibles destinées à la production pétrolière sous marine par profondeur d'eau moyenne ou importante, qui comprennent d'une part les canalisations assurant la liaison entre le fond sous marin et la surface (généralement désigné par le terme anglo-saxon de Risers), et, d'autre part, les canalisations qui doivent être posées au fonds depuis la surface, pour assurer la liaison (sur une distance qui peut varier considérablement selon les cas), par exemple, entre une tête de puits sous marine et l'extrémité inférieure du "riser", ou encore un organe de raccordement ("manifold") entre plusieurs conduites et qui constitue l'"embase" du "riser".

De telles canalisations sont utilisées pour transporter sous pression très élevée (par exemple 500 bar) le pétrole brut ou le gaz produit par le puits sous-marin, ou pour transporter du gaz ou de l'eau injecté sous pression dans la formation productrice, ou pour expédier à terre ou transporter jusqu'aux installations de collecte et d'expédition (postes de chargement'offshore par exemple) le pétrole ou le gaz préalablement traité à bord de la plateforme de production, ou encore pour assurer les fonctions de contrôle des têtes de puits sous-marines (lignes hydrauliques ou électriques, dites "ombilicaux").

Dans l'état actuel de la technique, tous les flexibles connus utilisés ou utilisables pour les applications décrites ci-dessus -pour lesquels les diamètres intérieurs peuvent varier par exemple entre environ 1" (2,54 cm) et environ 20" (50,8 cm), et pour les applications les plus courantes, entre 3" (7,62 cm) et 10" (25,4 cm) ou 12" (30,48 cm)- sont réalisés à partir d'éléments d'armature exclusivement en acier (aciers au carbone, aciers inoxydables, aciers alliés).

Lorsque la profondeur d'eau dans laquelle doivent être installés les flexibles reste relativement limitée, de l'ordre de 100 m à 200 ou 300 m (ce qui correspond, encore aujourd'hui, aux cas les plus fréquents dans l'état actuel du marché), la valeur de la profondeur d'eau ne joue pas un rôle essentiel en tant que paramètre de dimensionnement de la structure du flexible, qui est principalement conditionné par la valeur maximale envisagée pour la pression interne.

Par contre, déjà maintenant, certains champs pétroliers sous-marins sont mis en production dans des profondeurs d'eau se situant dans la gamme de 500 à 800 m, et la tendance à opérer dans les profondeurs d'eau plus importantes se confirme, avec divers projets dépassant les 1000 m d'eau.

Or, dans l'état actuel de la technique, les caractéristiques des flexibles à armure en acier qui sont les seuls actuellement disponibles pour les appplications en question sont telles que :

– à partir d'une profondeur d'eau qui peut varier, selon les cas, de 400 m à 700 m environ, il est nécessaire de prendre des dispositions particulières qui ont une incidence importante sur les coûts, en renforcement la structure métallique de flexible et/ou en utilisant des procédures et des équipements spéciaux pour la mise en place sur le site,

– les limites ultimes de profondeur d'eau que l'on peut atteindre avec ces flexibles actuellement connus peuvent être estimées de l'ordre de 600 m à 1000 m, ou au maximum, un peu plus de 1000 m pour les diamètres inférieurs à 6, la limite variant selon les cas en fonction du diamètre du flexible, de la pression maximale de service, et des divers autres paramètres ayant une influence sur le dimensionnement du flexible (tels que les caractéristiques du fluide transporté, ainsi que les conditions d'environnement et les conditions de réalisation de l'opération de pose).

Donc, un besoin pour une solution technique nouvelle existe déjà et va devenir de plus en plus important.

D'une façon plus générale, l'invention trouve une application dans tous les cas où le poids des flexibles actuellement disponibles crée des contraintes à l'utilisateur. Ainsi, par exemple, les flexibles à haute pression utilisés sur les chantiers' de forage pétrolier, tels que flexibles d'injection (rotary hose), lignes de contrôle du puits (kill line, choke line), dont la mise en oeuvre et la manipulation peuvent être facilitées si on dispose de flexibles moins lourds.

L'invention peut trouver une autre application intéressante dans les flexibles flottants, qui sont utilisés, en particulier, dans les installations de chargement/déchargement en mer pour relier une bouée ancrée au large et un tanker amarré à la bouée. L'allégement de la structure résultant de l'utilisation de l'aluminium permet en effet de réduire sensiblement l'importance des bouées ou autres organes de flottabilité qu'il faut ajouter au flexible pour le rendre flottant et qui présentent divers inconvénients (coût, encombrement, prise au courant et au vent).

L'invention permettant la réalisation de flexibles à haute résistance mécanique et de poids réduit peut également trouver une application dans l'aéronautique ou l'espace.

L'utilisation de l'aluminium à la place d'acier dans les conditions que permet l'invention est, par ailleurs, très avantageuse pour diverses applications particulières, par exemple pour réaliser les carcasses en "feuillard agrafé" installées dans certains cas à titre de protection mécanique, à l'extérieur du flexible par roulement du feuillard agrafé autour de la gaine plastique extérieure.

Par ailleurs, dans certains cas, le remplacement de l'acier (quel que soit le type d'acier envisagé) par un alliage d'aluminium peut procurer des avantages intéressants. Ainsi, par exemple, la carcasse intérieure dont sont munis certains flexibles, notamme ceux destinés au transport de pétrole brut de gisement (flexibles "rough bore") étant soumise à l'action corrosive du fluide transporté, l'utilisation de l'aluminium peut dans certains cas, permettre de réaliser une économie par rapport au coût des aciers inoxydables qui seraient nécessaires.

En outre, l'utilisation de l'aluminium peut s'avérer intéressante dans certains cas où existe un risque de pollution du fluide transporté par le matériau constituant la paroi interne du flexible, ce qui exclurait l'utilisation de l'acier (ou, au moins, de l'acier au carbone, indépendamment des aciers inoxydables qui pourraient être utilisés, éventuellement, mais seraient beaucoup plus coûteux), ainsi, par exemple, dans le cas des-aqueducs, ou des canalisations transportant certains produits chimiques.

D'autres cas peuvent encore se présenter où certaines propriétés de l'aluminium constituent un avantage par rapport à l'acier et créer ainsi une application possible intéressante pour l'invention, par exemple la propriété d'amagnétisme de l'aluminium.

Les flexibles selon la présente invention peuvent être employés dans des installations aériennes, tel par exemple pour les lignes de transfert de fluide, notamment en zone froide ou pour le transfert de fluide froid. En effet, ils présentent une bonne tenue au choc à basse température, alors que des aciers courant cassent par résilience dans les températures voisines de - 20°C.

Pour ce type d'application, les flexibles selon la présente invention pourront comporter de l'aluminium, pour tous les composants du flexible (carcase, voûte, armure) ou uniquement pour ceux exposés aux températures voisines ou inférieures à - 20°C.

En résumé, l'invention peut trouver une application dans tous les cas où, d'une part, l'aluminium présente un avantage par rapport à l'acier (légereté, résistance aux effets de corrosion...) et, d'autre part, les sollicitations mécaniques relativement importantes appliquées au flexible (pression interne, pression extérieure, effet d'écrasement, charge axiale...) nécessitent d'utiliser comme élément d'armature des produits (tréfilé, fils, câble, feuillard) offrant une résistance mécanique élevée comparable à celle que l'on peut obtenir avec l'acier.

3

S'agissant de réaliser des flexibles plus légers que les flexibles actuellement disponibles dont l'armature est constituée d'éléments en acier et, également, s'agissant de réaliser les armatures des flexibles avec des matériaux aptes à résister à certains effets particuliers, diverses solutions ont déjà été proposées.

Ainsi, par exemple, certaines techniques ont été développées par les déposants permettant de réaliser les fils d'armure des flexibles en matériau composite constitué de fibres noyées dans une résine plastique (FR-A-2.283.768, FR-A-2.312.356 et EP-A-263.860.

L'utilisation de matériaux composites à matière organique permet d'aller encore plus loin dans l'allègement des structures de flexibles, et, en particulier dans le cas des applications en mer profonde exposées ci-dessus, de rendre possible l'exploitation de champs sous-marins par des profondeurs d'eau extrêmement importantes. Mais, ces matériaux composites à matrice organique sont relativement très coûteux, et par comparaison, l'aluminium est beaucoup plus économique.

Il a été établi que l'utilisation d'alliage en application de l'invention doit permettre, dans le cas des applications aux canalisations de production pétrolière sous-marines exposées ci-dessus, de réaliser des installations dans des profondeurs d'eau pouvant atteindre et dépasser 1500 m, ce qui permet d'envisager pour l'aluminium dans les applications visées ci-dessus, un marché très important, au-delà des limites permises par l'acier, en admettant que certains cas exigeant des performances encore plus poussées seraient couverts par l'utilisation de matériaux composites.

Pour satisfaire les besoins existant dans le domaine de flexible léger, la pratique antérieure n'avait pas retenu l'utilisation d'aluminium. En effet, le dimensionnement de tels tubes conduit à des produits d'un encombrement et à une détérioration des performances mécaniques, tels que les effets du gain de poids en sont annulés.

La présente invention propose une sélection et des traitements de l'aluminium et une structure de tube flexible qui permettent d'alléger considérablement le poids du flexible tout en aboutissant à des produits utilisables et parfaitement performants.

L'invention concerne plus particulièrement les divers éléments d'armature métallique des flexibles utilisables dans les applications décrites ci-dessus.

Aux termes de l'invention, peuvent être notamment réalisés en alliage d'aluminium dans les conditions qui caractérisent l'invention, l'un ou l'autre, ou n'importe quelle combinaison, des éléments d'armature de flexibles suivants :

1 - Les fils constituant l'armure dite de résistance à la traction et à l'effet de fond (cette armure pouvant également prendre en charge tout ou partie des effets de pression circonférentiels en fonction de l'angle d'armage qui peut varier, à la limite, entre quelques degrés et environ 80°, mais qui est, en général, situé entre 10 et environ 65°.

Ces fils présentant une section qui peut être circulaire, éventuellement elliptique, ou (très couramment) rectangulaire avec, préférentiellement, les angles arrondis (les fils étant, selon l'invention, réalisés en alliage d'aluminium...),

2 - Les éléments constituant l'armure de résistance à la traction et à l'effet de fond réalisés sous forme de torons ou câbles, eux-mêmes constitués par l'enroulement hélicoïdal (câblage) de fils, selon l'invention, en aluminium. Dans le cas de l'utilisation de torons ou câbles comme élément d'armure, il est courant de les disposer à l'intérieur d'une masse compacte de matériau élastomérique,

3 - Les fils, ou "profilés" constituant "l'armure de pression", dont la fonction est de résister aux effets de la pression intérieure, ainsi qu'aux effets d'écrasement (en particulier liés aux opérations de pose du flexible dans le cas des canalisations sous-marines) et aux effets de pression extérieure. Ces profilés sont, couramment, réalisés sous forme de fils de section rectangulaire, aux coins préférablement arrondis.

Ils sont couramment réalisés sous forme d'une nappe ou de deux nappes de profilés de section présentant des encoches et des parties saillantes de manière à réaliser un effet d'accrochage mutuel, parfois désignés "agrafage", tels que :

. une nappe de un ou plusieurs fils de section en Z, par exemple le profil désigné couramment sous le nom de Zeta (voir, par exemple, description d'un profil de ce genre dans le brevet français FR-A-2.052.057 de la Chiers-TCBH),

. deux nappes de fils de section en U, les branches des U de la nappe intérieure étant dirigés dans l'extérieur de manière à s'intercaler avec les branches des U, dirigés vers l'intérieur, de la nappe externe,

. et autres dessins possibles.

Il convient de noter que l'"armure de pression" peut être réalisée par combinaison de plusieurs couches de l'un ou l'autre des types décrits ci-dessus.

Les profilés ou fils constituant l'armure de pression sont enroulés selon des angles d'environ 80 à 90° par rapport à l'axe du flexible.

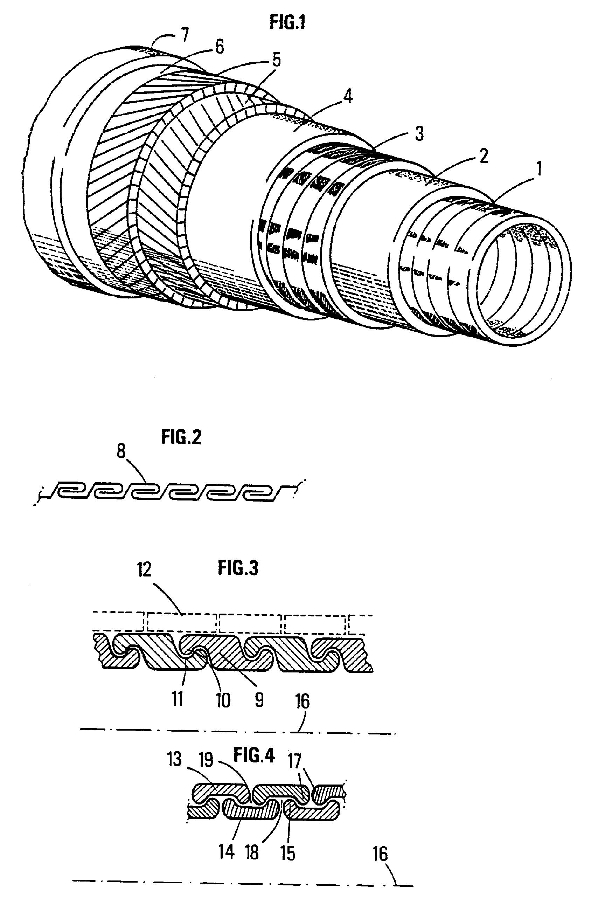

4 - Les éléments constituant la carcasse externe des flexibles et comprenant les structures réalisées par pliage d'un feuillard continu et les structures constituées par des fils agrafés ou emboîtés comme ceux décrits pour l'armure de pression (Figs 3 et 4), le pliage étant effectué de façon à réaliser, entre autre, des formes en U le long des deux bords du feuillard pour permettre l'agrafage des spires adjacentes. Le pliage peut être réalisé selon des dessins très variés.

Une forme très connue est décrite dans la demande de brevet français EN-83/19.474 (Feuillard agrafé) qui décrit une méthode de réalisation d'un tube flexible en feuillard agrafé applicable aux flexibles selon l'invention. Ces "feuillards agrafés" sont couramment utilisés comme carcasse interne des flexibles, en particulier dans le cas du transport de pétrole brut de gisement, pour éviter l'"implosion" de la gaine plastique interne.

Ils peuvent également être utilisés comme armure de résistance à la pression, lorsqu'il sont enroulés autour de la gaine intérieure d'étanchéité.

Ces structures de feuillards agrafés ou de fils agrafés ou emboîtés peuvent aussi être utilisés comme protection extérieure du flexible.

L'élément constituant la carcasse peut également l'être par un fils agrafé ou emboîtable, tel un fils en section en Z, notamment en Zéta.

Ainsi, la présente invention concerne une conduite flexible armée comportant un ou plusieurs des composants suivants, une armure de résistance à la pression, une armure de résistance à la traction et/ou une carcasse interne (voir, par exemple, EP-A-0147 288).

Elle se caractérise en ce qu'au moins l'un desdits composants comporte un ou plusieurs éléments allongés tel un profilé, un câble, un fil ou un feuillard, ledit élément ayant subi une opération de corroyage et étant composé d'un alliage à base d'aluminium des séries 2000, 5000, 6000 ou 7000, ledit alliage d'aluminium ayant une résistance à la rupture en traction (Rm) au moins égale à 250 MPa et une limite élastique à 0,2 % $Re_{0,2}$ au moins égale à 190 MPa, et ledit écrouissage comportant un écrouissage à froid ayant un taux de 3 % au moins dans le cas d'utilisation d'un alliage d'aluminium des séries 2000, 6000, 7000, ou un taux de 20 % au moins dans le cas d'utilisation d'un alliage d'aluminium de la série 5000.

Lorsque la conduite selon l'invention comporte une armure de résistance à la pression et/ou une armure de résistance à la traction, l'une au moins desdites armures pourra comporter au moins un élément allongé composé d'un alliage aluminium dans l'une des nuances suivantes : 2014, 2017, 2024, 2117, 2618, 5050, 5052, 5056, 5082, 5086, 5154, 5183, 5754, 6005, 6060, 6061, 6063, 6066, 6070, 6082, 6351, 7001, 7020, 7049, 7050, 7075, 7175, 7178 ou 7475.

L'élément allongé en alliage d'aluminium pourra avoir une résistance à la rupture en traction (Rm) au moins égale à 300 MPa et de préférence au moins à 350 MPa.

Lorsque la conduite selon l'invention comporte une carcasse interne, celle-ci pourra comporter au moins un élément allongé composé d'un alliage aluminium dans l'une des nuances 5050, 5052, 5056, 5083, 5456, 6060, 6061, 6082, 6083 ou 6106.

Lorsque la conduite selon l'invention comporte une carcasse interne comportant au moins un élément allongé composé d'un alliage d'aluminium, cet élément allongé pourra être un profilé ou un fils emboîtable ou agrafable, notamment du type "Zéta".

L'alliage d'aluminium utilisé selon la présente invention pourra subir un traitement thermique de mise en solution séparée.

L'élément allongé comportant l'alliage d'aluminium selon la présente invention pourra avoir subi une opération d'écrouissage en traitement final précédée ou/et suivie d'un revenu.

Cet écrouissage à froid pourra avoir ayant un taux compris entre 3 et 40 % et de préférence entre 5 et 25 % dans le cas d'utilisation d'un alliage d'aluminium des séries 2000, 6000 ou 7000.

Cet écrouissage à froid pourra avoir un taux compris entre 20 et 90 % et de préférence entre 40 et 70 % dans le cas d'utilisation d'un alliage d'aluminium de la série 5000.

L'élément allongé en alliage d'aluminium selon la présente invention pourra avoir subi un laminage ou un étirage.

Cet élément allongé pourra avoir subi un recuit partiel ou total ou une opération de trempe revenue dont les paramètres caractéristiques sont fonction dudit taux d'écrouissage et/ou de la nature de l'alliage.

Le composant comportant l'aluminium selon la présente invention pourra être recouvert d'un alliage de protection contre la corrosion.

Le composant comportant de l'aluminium pourra être recouvert d'un film thermoplastique, tel notamment un polyethylène, un polyamide, un PVDF ou un polypropylène, ou d'un élastomère ou d'un caoutchouc.

Ledit composant comportant essentiellement de l'aluminium pourra avoir une ductilité au moins égale à 3 %.

L'un au moins des composants pourra comporter de l'aluminium des séries 2000 ou 7000 ayant une ductilité comprise entre 6 et 20 % et de préférence entre 10 et 20 %.

L'un au moins des composants pourra comporter de l'aluminium des séries 5000 ou 6000 et une ductilité au moins égale à 6 %.

La conduite selon l'invention pourra comporter une carcasse, une gaine et une armure, ladite carcasse comportant un feuillard agrafé ou un fils agrafé notamment un zéta, et ladite armure comportant un élément qui est un profilé, un câble ou fils.

Ce feuillard ou fils agrafé de la carcasse et/ou ledit élément allongé de ladite armure pourra comporter un alliage d'aluminium.

La carcasse pourra être constituée d'un feuillard ou un fils agrafé en acier.

L'armure pourra comporter de l'acier.

L'armure de résistance à la traction pourra comporter essentiellement de l'acier et ladite armure de résistance à la pression comporte essentiellement un alliage d'aluminium.

La conduite selon l'invention pourra comporter une gaine anti-frottement qui pourra être de préférence étanche et isolante électriquement, cette gaine étant disposée entre l'armure de résistance à la pression et l'armure de résistance à la traction.

La conduite selon l'invention pourra comporter une armure de résistance à la traction comportant au moins deux couches de fils, câble ou profilé et ainsi qu'une couche ou gaine de matériau anti-frottement intercalée entre au moins lesdites deux couches.

L'armure de résistance à la traction et ladite armure de résistance à la pression pourront comporter essentiellement un alliage d'aluminium.

La conduite selon l'invention pourra comporter un feuillard externe ou du fils agrafable externe, comportant éventuellement de l'aluminium.

La conduite selon l'invention pourra comporter au moins une gaine interne comportant un matériau plastique, tel qu'un polyamide, qu'un PVDF, ou un matériau élastique tels que les caoutchoucs ou élastomères synthètiques.

La conduite selon l'invention pourra comporter une armure de résistance à la pression comportant au moins une nappe formée à partir d'un profilé ayant éventuellement une section à forme emboitable, tel un zéta, un "U", réalisé à partir d'un alliage d'aluminium.

La conduite selon l'invention pourra comporter un matériau composite à matrice organique, notamment pour la constitution d'un élément allongé.

Les termes utilisés pour désignés les états métallurgiques et les traitements thermiques et mécaniques des alliages d'aluminium sont définis dans les normes NF 02 006 et NF 02 011.

A savoir, notamment :

état F         : état brut de fabrication,

état O         : recuit,

état H         : écroui et éventuellement partiellement adouci,

état T         : état durci par traitement thermique - traitement thermique considéré comme des combinaisons de tout ou partie des traitement suivants : mise en solution, trempe, maturation, revenu avec applications éventuelles de déformations plastiques.

Bien entendu, dans la présente invention, les éléments allongés pour lesquels il est proposé d'utiliser un alliage d'aluminium ont généralement une fonction mécanique. Parfois, ils peuvent avoir une fonction supplémentaire du fait de leurs caractéristiques d'anticorrosion.

Les premières réalisations de prototypes ont permis de constater que la fabrication de flexibles comportant des éléments de structure en aluminium peut se faire sans difficulté particulière, par rapport aux flexibles connus à armures en acier. En particulier, nous avons trouvé que, dans le cas des profilés pleins de section relativement complexes, du type "fils de forme" tels que les fils Zéta, la fabrication de tels profilés en aluminium est plus facile et moins coûteuse que dans le cas des aciers au carbone couramment utilisés dans les flexibles de haute performance visés principalement par l'invention.

Il a également été constaté que l'utilisation de l'aluminium permet de fabriquer les fils ou profilés, y compris les profilés du type Zéta, sans difficulté dans des dimensions de section beaucoup plus importantes que ce qui est possible dans la pratique avec l'acier. Ceci est dû, en particulier, au fait que les fils et profilés en acier sont réalisés à partir de "fils machine" dont le diamètre est limité à environ 20 mm dans l'état actuel des équipements et des procédés de fabrication mis en oeuvre par les divers fournisseurs.

Dans ces conditions, la réalisation des fils Zéta, par exemple, est limitée à une épaisseur maximale d'environ 10 mm dans le cas de l'acier. Par contre, dans le cas de l'aluminium, la mesure limitative n'existe pas, du fait que les gammes de fabrication sont différentes. Nous avons pu vérifier, effectivement, que des fils Zéta peuvent être réalisés sans difficulté dans des épaisseurs pouvant atteindre 160 ou 200 mm.

L'avantage procuré par la possibilité de fabriquer des profilés en aluminium avec de fortes épaisseurs est, en particulier, de permettre de réaliser l'armure de pression avec une seule couche de fils Zéta de forte épaisseur dans les cas où, la pression interne étant élevée et le diamètre relativement important, l'épaisseur nécessaire dépasserait le maximum possible en acier. Il en résulte l'obligation de réaliser l'armure de pression en acier par superposition de deux couches de fils (par exemple une couche intérieure de fils Zéta et une couche extérieure de fils rectangulaire de frette) et une augmentation sensible du coût de fabrication que l'aluminium permet d'éviter.

En outre, la possibilité de réaliser des fils Zéta de forte épaisseur, grâce à l'aluminium, présente dans certains cas l'avantage de pouvoir enrouler le fléxible sur des rayons plus faibles sans risque de désagrafage.

La présente invention sera mieux comprise et ses avantages apparaitront plus clairement à la description qui suit d'exemples nullement limitatifs illustrés par les figures ci-annexées, parmi lesquelles :

– la figure 1 représente une structure de flexible comportant une caracasse interne agrafée en feuillard ou en fils agrafés ou emboîtables 1, une gaine d'étanchéité 2, une couche de fils agrafés ou emboîtables 3, une gaine intérieure 4, des armures 5, un ruban 6 puis une gaine extérieure 7,

– la figure 2 illustre en section, un feuillard agrafé par pliage, et

– les figures 3 et 4 montrent en section des profils emboîtables ou agrafable qui peuvent être également désignés de fils emboîtés ou agrafés.

Les exemples N. 1 à N. 13 concernent un flexible réalisé avec la configuration représentée à la figure 1, c'est-à-dire qu'il comporte successivement une carcasse interne agrafée 1 qui peut être un feuillard agrafé par pliage ou un fil emboîté ou agrafé, ou destinée à éviter l'écrasement du tube du fait d'un effort externe qu'il soit réparti ou non, les termes utilisés par les techniciens sont "pour éviter le collapse", une gaine de rilsan 2, une couche de fil agrafé de forme zéta ou de profilé emboîtable " (Figs 3 ou 4), une gaine intérieure en rilsan 4, des armures 5 à 35° par rapport à l'axe du flexible, un ruban 6 puis une gaine extérieure en rilsan 7.

La gaine 4 peut être étanche ou non.

Les caractéristiques mécaniques sont exprimées en résistance maximale à la traction : Rm en MPa, en limite d'élasticité à 0,2 % d'allongement : Re en MPa, et en allongement % sur 50 mm : A%.

Dans les tableaux donnés dans les exemples, on a successivement les colonnes suivantes :

. Numérotation des couches,

. Description, nature et dimension (en mm) des couches,

. Rm en MPa,

. Kg/m = poids en kg mar mètre de flexible,

. D.i. = diamètre interne en mm,

. Ep. = épaisseur de la couche en mm,

. Le facteur de flottabilité est défini par :

$$\frac{\text{poids vide dans l'air (kg/m)}}{\text{Volume externe (l/m) X 1,02 (densité de l'eau de mer)}}$$

La charge axiale limite d'endommagement mentionnée dans les tableaux sous la rubrique "limite d'endommagement en traction", est définie dans le cas théorique d'un flexible rectiligne uniquement soumis à une force axiale de traction.

La "profondeur de pose théorique" mentionnée dans le tableau est une limite déterminée ici comme égale au quotient de la "limite d'endommagement en traction" par le poids linéaire du flexible plein d'eau dans l'eau. Le flexible étant normalement posé plein d'eau, cette valeur correspond à la longueur du flexible suspendu depuis la surface, telle que le poids total apparent de flexible serait égal à la charge axiale théorique correspondant à la limite d'endommagement du flexible supposé rectiligne. Cette valeur théorique, permet de déterminer l'ordre de grandeur de la limite de profondeur d'eau acceptable dans la pratique en tenant compte :

– d'un coefficient de sécurité adéquat. Dans l'état actuel de la technique, et, en particulier, en fonction de différents règlements applicables, ce coefficient de sécurité est couramment très égal à 2,

– de divers facteurs dépendant des opérations de pose et qui ont pour effet d'augmenter les contraintes dans les éléments composant la structure du flexible par rapport au cas de référence du flexible rectiligne soumis à une charge axiale simple.

Ces facteurs de surcharge se répartissent en deux catégories :

– la manoeuvre du flexible depuis la surface induit une augmentation des contraintes à l'endroit où le flexible est pris en charge par l'équipement de pose, ce dernier pouvant être de divers types : treuil (utilisation limitée dans le cas des charges importantes associées aux grandes profondeurs d'eau), cabestan, tensionneurs à chenille (bi ou trichenille), ou tout type de treuil linéaire associé à un système de serrage du flexible pour reprendre la charge axiale, et également, en général, au moins une zone (ou simplement un support fixe en forme de gouttière incurvée) pour assurer le passage du flexible par dessus bord.

– les efforts dynamiques déterminés par les mouvements, un support flottant utilisé pour la pose en fonction des conditions de mer limites envisagées peuvent être exprimés en terme d'accélération verticale sous la forme d'un coefficient de majoration du poids apparent.

Ainsi, comme cela a déjà été dit, l'ordre de grandeur de la profondeur d'eau maximale admissible à la pose en fonction de la limite d'endommagement sous l'effet du poids du flexible peut être évalué, à titre d'estimation sommaire, à partir de la "profondeur de pose théorique" mentionnée dans les tableaux, en divisant cette dernière par un coefficient global de réduction qui prend en compte à la fois le coefficient de sécurité et les facteurs de surcharge liés aux opérations de pose qui peuvent varier du simple au double selon les circonstances (manoeuvre du flexible par les équipements de pose et accélérations du support flottant). En pratique, le coefficient global de réduction de la charge admissible ainsi définie peut varier de peu plus de 2 dans les cas les plus favorables à un maximum pouvant dépasser 4.

Pour interpréter de façon simple et concrète les valeurs théoriques de références figurant dans les tableaux, on pourra adopter pour ce coefficient une valeur type moyenne de 3, ce qui permettra de comparer les performances respectives des différents flexibles cités en exemples, bien que la limite de profondeur d'eau ainsi déterminée n'ait, pour chaque flexible, qu'une signification très approximative en valeur absolue. Quoiqu'il en soit, les chiffres théoriques donnés dans les tableaux permettent la comparaison des différents exemples entre eux.

La "pression de collapse" mentionnée dans les tableaux correspond à la limite de résistance à l'écrasement du flexible sous l'effet de la pression hydrostatique extérieure, déterminée par la profondeur d'eau. Du fait que la structure est calculée sur la base de l'hypothèse que l'espace annulaire peut se trouver soumis à la pression extérieure (percement accidentel de la gaine extérieure par exemple) cette valeur est conditionnée par la résistance à l'écrasement de la carcasse intérieure dans le cas des flexibles du type "rough bore" qui sont décrits ici comme exemples.

On peut déterminer directement la profondeur d'eau maximale acceptable pour un flexible, du point de vue de sa résistance à la pression extérieure, en appliquant à la "pression de collapse" traduite en profondeur d'eau (pression de la colonne hydrostatique en fonction de la densité de l'eau de mer) un coefficient de sécurité de 1,5 qui correspond aux règlements actuels applicables.

L'évaluation de la profondeur d'eau maximale est acceptable pour un flexible tel que décrit dans les exemples.

La méthode d'évaluation sommaire exposée permet, au niveau des valeurs relatives, d'estimer l'ordre de grandeur des performances respectives des divers flexibles à comparer, étant entendu que la valeur absolue de la profondeur acceptable pour chacun contre eux peut varier considérablement en fonction des circonstances.

Les propriétés mécaniques indiquées pour les éléments de structure des flexibles décrits dans les exemples sont relatives à l'état dans lequel se trouvent les éléments de structure en aluminium une fois accomplie la dernière des opérations successives de traitements thermiques et/ou mécaniques spécifiées pour chaque exemple, c'est-à-dire au moment où ils vont être enroulés sur une bobine, prêts à être installés sur la machine utilisée pour la fabrication du flexible (armeuse, spiraleuse, ...).

Du fait que les divers éléments d'armature métallique des flexibles visés par l'invention sont, en général, mis en place sur le flexible de telle sorte qu'ils se trouvent dans la configuration hélicoïdale imposée par la géométrie du flexible et l'angle d'armage sans avoir à subir de contrainte résiduelle sensible, c'est-à-dire qu'il sont posés et enroulés par déformation plastique et non pas élastique, ces éléments doivent subir ensuite une opération complémentaire de formage à froid. Ceci concerne aussi bien le cas des feuillards qui doivent être formés par pliage dans les outils de profilage des spiraleuses (voir par exemple FR-A-2.555.920) que le cas, par exemple, des opérations de preformation des fils d'armure décrits par FR-A-2.528.733. L'écrouissage de métal qu'implique cette ultime opération de déformation à froid pour modifier les propriétés mécaniques telles qu'elles sont mentionnées dans les exemples. Il en résulte en particulier un relèvement de la limite élastique qui peut dans certains cas ne pas être négligeables, principalement lorsque l'élément en aluminium devant être mis en place dans la machine de fabrication du flexible se trouve dans l'état recuit. La conséquence pratique de cette situation est que les valeurs caractérisant la résistance mécanique des flexibles sont des minima, les valeurs réélles pouvant dans certains cas être plus ou moins supérieures aux valeurs mentionnées ici dans les exemples.

L'exemple 1 concerne un flexible optimisé ne comportant pas de l'aluminium.

Exemple n° 1

On réalise un flexible de diamètre interne égal à 8″ (203,2 mm) comportant une carcasse interne constituée d'un feuillard en acier inoxydable AISI 304 de 2 mm d'épaisseur de Rm = 540 MPa et de Re = 450 MPa, d'une gaine intérieure en rilsan de 6 mm d'épaisseur, d'une couche de fil agrafé zéta de 6,2 mm d'épaisseur réalisé avec un acier FM 15 ayant comme caractéristiques : Rm = 780 MPa, A = 2,5 %, de deux couches d'armures) à 35° réalisées avec un acier FM15, d'une gaine extérieure en rilsan de 7 mm d'épaisseur.

8

Ce flexible, ainsi constitué, présente les caractéristiques suivantes :

## Exemple 1

| | Description | Rm MPa | KG/m | D.i. mm | Ep. mm |
|---|---|---|---|---|---|
| 1 | Carcasse en feuillard inox 304  80 X 2 mm | 540 | 31 | 203,2 | 10.0 |
| 2 | Gaine interne rilsan | | 4.9 | 223,2 | 6.0 |
| 3 | Zéta FM 15  épaisseur: 6.2mm | 780 | 31.2 | 235.2 | 6.2 |
| 4 | Gaine interne rilsan | | 5 | 247.6 | 6.0 |
| 5 | Armures à 35° FM15 épaisseur: 2.5 mm | 780 | 30.0 | 259.6 | 5.0 |
| 6 | Ruban | | 0.5 | 269.6 | 0.75 |
| 7 | Gaine externe rilsan | | 6.4 | 271.1 | 7.0 |

| Caractéristiques | Unité anglaise | Unité métrique |
|---|---|---|
| Diamètre interne | 8.00 in | 203.20 mm |
| Diamètre externe | 11.22 in | 285.10 mm |
| Volume interne | 0.379 cf/ft | 35.18 l/m |
| Volume externe | 0.687 cf/ft | 63.84 l/m |
| Poids vide dans l'air | 73.2 lb/ft | 108.9 kg/m |
| Poids plein d'eau de mer dans l'air | 97.4 | 144.9 kg/m |
| Poids vide dans l'eau de mer | 29.2 lb/ft | 43.4 kg/m |
| Poids plein d'eau de mer dans l'eau de mer | 53.4 lb/ft | 79.5 kg/m |
| Facteur de flottabilité vide dans l'eau de mer | | 1.66 |
| Pression d'éclatement | 5350 psi | 369 bars |
| Pression de collapse | 1570 psi | 108 bars |
| Limite d'endommagement en traction | 382 685 lbs | 170 250 daN |
| Profondeur de pose théorique | | 2 141 m |

Comme cela a déjà été dit, ce flexible est optimisé dans son dessin et les matériaux utilisés.

**Exemple n°2:**

On réalise un flexible comme celui de l'exemple n° 1, mais l'on remplace dans la couche n° 3 le fil agrafé de forme zéta de 6,2 mm d'épaisseur en acier FM15 par un fil agrafé zéta de 8 mm d'épaisseur en alliage d'aluminium 7049 à l'état T6 de caractéristiques mécaniques Rm = 620 MPa, A = 10 %.

Le flexible réalisé présente les caractéristiques suivantes :

Exemple 2

| Description | Rm MPa | KG/m | D.i. mm | Ep. mm |
|---|---|---|---|---|
| 1 Carcasse en feuillard inox | | | | |
| 304  80 X 2 mm | 540 | 31 | 203,2 | 10.0 |
| 2 Gaine interne rilsan | | 4.9 | 223,2 | 6.0 |
| 3 Zéta aluminium | | | | |
| épaisseur: 8.0 mm | 620 | 14.3 | 235.2 | 8.0 |
| 4 Gaine interne rilsan | | 5 | 251.2 | 6.0 |
| 5 Armures à 35° FM15 | | | | |
| épaisseur: 2.5 mm | 780 | 30.5 | 263.2 | 5.0 |
| 6 Ruban | | 0.5 | 273.2 | 0.75 |
| 7 Gaine externe rilsan | | 6.4 | 274.7 | 7.0 |

| Caractéristiques | Unité anglaise | Unité métrique |
|---|---|---|
| Diamètre interne | 8.00 in | 203.20 mm |
| Diamètre externe | 11.37 in | 288.70 mm |
| Volume interne | 0.379 cf/ft | 35.18 l/m |
| Volume externe | 0.705 cf/ft | 65.46 l/m |
| Poids vide dans l'air | 62.3 lb/ft | 92.6 kg/m |
| Poids plein d'eau de mer dans l'air | 86.5 lb/ft | 128.7 kg/m |
| Poids vide dans l'eau de mer | 17.2 lb/ft | 25.5 kg/m |
| Poids plein d'eau de mer dans l'eau de mer | 41.4 lb/ft | 61.6 kg/m |
| Facteur de flottabilité vide dans l'eau de mer | | 1.38 |
| Pression d'éclatement | 5386 psi | 371 bars |
| Pression de collapse | 1570 psi | 108 bars |
| Limite d'endommagement en traction | 388 638 lbs | 172 898 daN |
| Profondeur de pose théorique | | 2 806 m |

On constate qu'à des performances équivalentes à celles du flexible tout acier décrit dans l'exemple n° 1, on a réalisé un allègement de 22,5 % du poids du flexible plein d'eau de mer dans l'eau de mer et que la profondeur de pose théorique passe de 2 141 m à 2 868 m.

Un flexible de caractéristiques mécaniques sensiblement équivalentes peut être obtenu en remplaçant l'alliage 7049 à l'état T6 par un alliage 7178 à l'état T6 ou préférentiellement à l'état T76 (traitement de double revenu de 3 heures à 116-127°C et de 15 heures à 157-160°C) qui améliore sa résistance à la corrosion sous

EP 0 372 041 B1

tension, par un alliage 7075 état T6 ou un alliage 7001 à l'état T73 (traitement de double revenu), un alliage 7175 à l'état T66, ou l'alliage 7475 à l'état T6.

**Exemple n° 3 :**

On réalise un flexible comme celui de l'exemple n° 1, mais l'on remplace dans la couche n° 3 le fil agrafé zéta de 6,2 mm d'épaisseur en acier FM 15 par un fil agrafé zéta de 10 mm d'épaisseur en alliage d'aluminium 2017A à l'état T3 ayant subi un écrouissage avant trempe de 15 % et de caractéristiques mécaniques Rm = 500 MPa, A = 9 %. Dans ces conditions, les caractéristiques du flexible obtenu sont les suivantes :

Exemple 3

| | Description | Rm MPa | KG/m | D.i. mm | Ep. mm |
|---|---|---|---|---|---|
| 1 | Carcasse en feuillard inox 304  80 X 2 mm | 540 | 31.0 | 203,2 | 10.0 |
| 2 | Gaine interne rilsan | | 4.9 | 223,2 | 6.0 |
| 3 | Zéta aluminium | | | | |

11

| | | | | |
|---|---|---|---|---|
| épaisseur: 10 mm | 500 | 17.4 | 235.2 | 10.0 |
| 4 Gaine interne rilsan | | 5.1 | 255.2 | 6.0 |
| 5 Armures à 35° FM15 | | | | |
| épaisseur: 2.5 mm | 780 | 31.0 | 267.2 | 5.0 |
| 6 Ruban | | 0.5 | 277.2 | 0.75 |
| 7 Gaine externe rilsan | | 6.5 | 278.7 | 7.0 |

| Caractéristiques | Unité anglaise | Unité métrique |
|---|---|---|
| Diamètre interne | 8.00 in | 203.20 mm |
| Diamètre externe | 11.52 in | 292.70 mm |
| Volume interne | 0.379 cf/ft | 35.18 l/m |
| Volume externe | 0.724 cf/ft | 67.29 l/m |
| Poids vide dans l'air | 64.8 lb/ft | 96.3 kg/m |
| Poids plein d'eau de mer dans l'air | 89.0 lb/ft | 132.4 kg/m |
| Poids vide dans l'eau de mer | 18.4 lb/ft | 27.4 kg/m |
| Poids plein d'eau de mer dans l'eau de mer | 42.6 lb/ft | 63.4 kg/m |
| Facteur de flottabilité vide dans l'eau de mer | | 1.40 |
| Pression d'éclatement | 5398 psi | 372 bars |
| Pression de collapse | 1570 psi | 108 bars |
| Limite d'endommagement en traction | 392 805 lbs | 174 752 daN |
| Profondeur de pose théorique | | 2 756 m |

On constate que pour des caractéristiques identiques de pression d'éclatement et de pression de collapse, on a réalisé avec ce flexible un allégement de 20,2 % du poids du flexible plein d'eau de mer dans l'eau par rapport au poids du flexible tout acier de l'exemple n° 1 et que la profondeur théorique de pose est de 2756 m contre 2140 m.

Un flexible de caractéristiques sensiblement équivalentes peut être réalisé en utilisant l'alliage 2017A à l'état T4 suivi d'un écrouissage final de 15 % ou en utilisant les alliages 2014, 2024 et 2618A dans les mêmes états que le 2017A.

Un flexible de caractéristiques identiques peut aussi être obtenu en utilisant certains alliages d'aluminium de la série 7000, il s'agit des alliages 7075, 7050, préférentiellement dans les états T73 ou T76, leur conférant une bonne résistance à la corrosion, suivis ou non d'un écrouissage final de 5 à 20 % (état T73X).

**Exemple n° 4 :**

On réalise un flexible comme celui de l'exemple n° 1, mais l'on remplace dans la couche n° 3 le fil agrafé de forme zéta de 6,2 mm d'épaisseur en acier FM15 par un fil agrafé zéta de 12 mm d'épaisseur en alliage d'aluminium 6061 à l'état T8, de caractéristiques mécaniques Rm = 410 MPa, A % = 15. Le flexible réalisé présente les caractéristiques suivantes :

Exemple 4

| Description | Rm MPa | KG/m | D.i. mm | Ep. mm |
|---|---|---|---|---|
| 1 Carcasse en feuillard inox 304 80 X 2 mm | 540 | 31.0 | 203,2 | 10.0 |
| 2 Gaine interne rilsan | | 4.9 | 223,2 | 6.0 |
| 3 Zéta aluminium épaisseur: 12.0 mm | 410 | 20.8 | 235.2 | 12.0 |
| 4 Gaine interne rilsan | | 5.2 | 259.2 | 6.0 |
| 5 Armures à 35° FM15 épaisseur: 2.5 mm | 780 | 31.3 | 271.2 | 5.0 |
| 6 Ruban | | 0.5 | 281.2 | 0.75 |
| 7 Gaine externe rilsan | | 6.6 | 282.7 | 7.0 |

| Caractéristiques | Unité anglaise | Unité métrique |
|---|---|---|
| Diamètre interne | 8.00 in | 203.20 mm |
| Diamètre externe | 11.68 in | 296.70 mm |
| Volume interne | 0.379 cf/ft | 35.18 L/m |
| Volume externe | 0.744 cf/ft | 69.14 L/m |
| Poids vide dans l'air | 67.2 lb/ft | 100.0 kg/m |
| Poids plein d'eau de mer dans l'air | 91.4 | 136.1 kg/m |
| Poids vide dans l'eau de mer | 19.6 lb/ft | 29.2 kg/m |
| Poids plein d'eau de mer dans l'eau de mer | 43.8 lb/ft | 65.2 kg/m |
| Facteur de flottabilité vide dans l'eau de mer | | 1.41 |
| Pression d'éclatement | 5386 psi | 371 bars |
| Pression de collapse | 1570 psi | 108 bars |
| Limite d'endommagement en traction | 412 147 lbs | 183 357 daN |
| Profondeur de pose théorique | | 2 812 m |

On constate qu'à performances équivalentes au niveau de la pression d'éclatement et de la pression de collapse, on a réalisé un allégement de 18 % du poids de flexible plein d'eau de mer dans l'eau de mer et que la profondeur de pose théorique est de 2812 m.

On peut réaliser un flexible de caractéristiques mécaniques et de poids équivalents en remplaçant l'alliage 6061 qui peut être utilisé à l'état T8 ou à l'état T6 ou T9 par les alliages de la série 6000 : les alliages 6063, 6082 utilisés dans les mêmes états que le 6061.

Un flexible de caractéristiques mécaniques équivalentes peut aussi être réalisé avec des alliages de la série 5000, notamment l'alliage 5056 à l'état H3X, c'est-à-dire ayant subi un recuit de désensibilisation à la

13

corrosion à 230-240°C suivi d'un écrouissage ou à l'état H1 et l'alliage 5082 à l'état H1.

**Exemple n° 5 :**

On réalise un flexible comme celui de l'exemple n° 1, mais l'on remplace la couche de zéta de 6,2 mm d'épaisseur en acier FM15 par une couche de fil zéta de 14 mm d'épaisseur réalisée en alliage 5082 à l'état H1 et présentant un écrouissage final de 25 % et dont les caractéristiques mécaniques sont les suivantes : Rm = 350 MPa, A = 13 %.

Dans ces conditions, les caractéristiques du flexible sont les suivantes :

Exemple 5

| | Description | Rm MPa | KG/m | D.i. mm | Ep. mm |
|---|---|---|---|---|---|
| 1 | Carcasse en feuillard inox 304  80 X 2 mm | 540 | 31.0 | 203,2 | 10.0 |
| 2 | Gaine interne rilsan | | 4.9 | 223,2 | 6.0 |
| 3 | Zéta aluminium épaisseur: 14.0 mm | 350 | 24.4 | 235.2 | 14.0 |
| 4 | Gaine interne rilsan | | 5.3 | 263.2 | 6.0 |
| 5 | Armures à 35° FM15 épaisseur: 2.5 mm | 780 | 31.9 | 275.2 | 5.0 |
| 6 | Ruban | | 0.5 | 285.2 | 0.75 |
| 7 | Gaine externe rilsan | | 6.7 | 286.7 | 7.0 |

| Caractéristiques | Unité anglaise | Unité métrique |
|---|---|---|
| Diamètre interne | 8.00 in | 203.20 mm |
| Diamètre externe | 11.84 in | 300.70 mm |
| Volume interne | 0.379 cf/ft | 35.18 l/m |
| Volume externe | 0.764 cf/ft | 71.02 l/m |
| Poids vide dans l'air | 70.3 lb/ft | 104.7 kg/m |
| Poids plein d'eau de mer dans l'air | 94.6 | 140.8 kg/m |
| Poids vide dans l'eau de mer | 21.5 lb/ft | 32.0 kg/m |
| Poids plein d'eau de mer dans l'eau de mer | 45.7 lb/ft | 68.0 kg/m |
| Facteur de flottabilité vide dans l'eau de mer | | 1.44 |
| Pression d'éclatement | 5386 psi | 371 bars |
| Pression de collapse | 1570 psi | 108 bars |
| Limite d'endommagement en traction | 419 965 lbs | 186 835 daN |
| Profondeur de pose théorique | | 2 747 m |

On constate que l'utilisation d'un zéta de 14 mm d'épaisseur en alliage d'aluminium permet de réaliser un allégement du flexible plein d'eau de mer dans l'eau de mer de 14,5 % par rapport au flexible de l'exemple n° 1 et que la profondeur de pose théorique passe à 2747 m.

Un flexible de caractéristiques mécaniques identiques peut être réalisé en remplaçant l'alliage 5082 par les alliages 5086, 5154, 5754, 5052 à l'état H1 ou par les alliages 6005A, 6081, 6181, 6351, 6060, 6066, 6070 à l'état H1, T4 ou T6 ou T8 ou T9, l'alliage 7020 à l'état T6.

**Exemple n° 6 :**

On réalise un flexible comme celui décrit dans l'exemple n° 1, mais l'on remplace la couche 3 de fil zéta de 6,2 mm d'épaisseur en acier FM15 par une couche de fil zéta de 16 mm d'épaisseur en alliage d'aluminium 5052 à l'état H1, l'écrouissage final étant de 45 %, de caractéristiques mécaniques Rm = 310 MPa, A % = 9.

Dans ces conditions, les caractéristiques du flexible obtenu sont les suivantes :

Exemple 6

| | Description | Rm MPa | KG/m | D.i. mm | Ep. mm |
|---|---|---|---|---|---|
| 1 | Carcasse en feuillard inox 304  80 X 2 mm | 540 | 31.0 | 203,2 | 10.0 |
| 2 | Gaine interne rilsan | | 4.9 | 223,2 | 6.0 |
| 3 | Zéta aluminium épaisseur: 16.0 mm | 310 | 28.4 | 235.2 | 16.0 |
| 4 | Gaine interne rilsan | | 5.4 | 267.6 | 6.0 |
| 5 | Armures à 35° FM15 épaisseur: 2.5 mm | 780 | 32.3 | 279.2 | 5.0 |
| 6 | Ruban | | 0.5 | 289.2 | 0.75 |
| 7 | Gaine externe rilsan | | 6.8 | 290.7 | 7.0 |

| Caractéristiques | Unité anglaise | Unité métrique |
|---|---|---|
| Diamètre interne | 8.00 in | 203.20 mm |
| Diamètre externe | 12.00 in | 304.70 mm |
| Volume interne | 0.379 cf/ft | 35.18 l/m |
| Volume externe | 0.785 cf/ft | 72.92 l/m |
| Poids vide dans l'air | 73.3 lb/ft | 109.2 kg/m |
| Poids plein d'eau de mer dans l'air | 97.6 | 145.2 kg/m |
| Poids vide dans l'eau de mer | 23.1 lb/ft | 34.4 kg/m |
| Poids plein d'eau de mer dans l'eau de mer | 47.4 lb/ft | 70.5 kg/m |
| Facteur de flottabilité vide dans l'eau de mer | | 1.46 |
| Pression d'éclatement | 5386 psi | 371 bars |
| Pression de collapse | 1570 psi | 108 bars |
| Limite d'endommagement en traction | 423 475 lbs | 188 397 daN |
| Profondeur de pose théorique | | 2 672 m |

On constate que pour des caractéristiques identiques de pression d'éclatement et de pression de collapse, on a obtenu avec ce flexible un allègement de 11,3 % et que la profondeur théorique de pose estde 2672 m.

Un flexible de caractéristiques sensiblement équivalentes peut être obtenu en remplaçant l'alliage 5052 par les alliages 2017, 2117, 5050, 5154, 5754 à l'état H1, les alliages 5056, 5082, 5086 et 5183 à l'état F ou H.

**Exemple n° 7 :**

On réalise un flexible comme celui décrit dans l'exemple n° 1, mais l'on remplace la couche n° 1 constituée d'une carcasse interne en feuillard acier inoxydable AISI 304 de 2 mm d'épaisseur par un feuillard en alliage d'aluminium 5052 à l'état H1 de 3,5 mm d'épaisseur de Rm = 320 MPa, et Re = 290 MPa.

Dans ces conditions, les caractéristiques ou flexible obtenu sont les suivantes :

## Exemple 7

| | Description | Rm MPa | KG/m | D.i. mm | Ep. mm |
|---|---|---|---|---|---|
| 1 | Carcasse en feuillard aluminium 140 X 3,5 mm | 320 | 19,3 | 203.2 | 17.5 |
| 2 | Gaine interne rilsan | | 5.2 | 238.2 | 6.0 |
| 3 | Zéta FM 15 épaisseur: 6.7mm | 780 | 35.8 | 250.2 | 6.7 |
| 4 | Gaine interne rilsan | | 5.3 | 263.6 | 6.0 |
| 5 | Armures à 35° FM15 épaisseur: 2.5 mm | 780 | 31.8 | 275.6 | 5.0 |
| 6 | Ruban | | 0.5 | 285.6 | 0.75 |
| 7 | Gaine externe rilsan | | 6.7 | 287.1 | 7.0 |

| Caractéristiques | Unité anglaise | Unité métrique |
|---|---|---|
| Diamètre interne | 8.00 in | 203.20 mm |
| Diamètre externe | 11.85 in | 301.10 mm |
| Volume interne | 0.403 cf/ft | 37.41 l/m |
| Volume externe | 0.766 cf/ft | 71.21 l/m |
| Poids vide dans l'air | 70.2 lb/ft | 104.5 kg/m |
| Poids plein d'eau de mer dans l'air | 96.0 | 142.9 kg/m |
| Poids vide dans l'eau de mer | 21.5 lb/ft | 32.0 kg/m |
| Poids plein d'eau de mer dans l'eau de mer | 47.3 lb/ft | 70.4 kg/m |
| Facteur de flottabilité vide dans l'eau de mer | | 1.43 |
| Pression d'éclatement | 5365 psi | 370 bars |
| Pression de collapse | 4130 psi | 106 bars |
| Limite d'endommagement en traction | 407937 lbs | 181484 daN |
| Profondeur de pose théorique | | 2578 m |

On constate que pour des caractéristiques de pression d'éclatement et de collapse équivalentes à celles du flexible de l'exemple n° 1, on a réalisé un allègement de 11,4 % et que la pronfondeur théorique de pose est de 2 578 mètres.

On obtiendra un flexible de caractéristiques identiques quelle que soit la nuance et l'état de l'aluminium utilisé pour réaliser la carcasse interne, on utilisera préférentiellement les alliages présentant la meilleure tenue à la corrosion et notamment les alliages 1100, 1180, 3003, 5052, 5056, 5083, 5456, 6060, 6061, 6082, 6083, 6106. Les alliages de la série 2000 et de la série 7000 peuvent aussi être utilisés.

**Exemple n° 8 :**

On réalise un flexible comme celui de l'exemple n° 1, mais l'on remplace la couche n° 1 constituée d'une carcasse interne en feuillard en acier inoxydable AISI 304 de 2 mm d'épaisseur par une carcasse interne constituée par un fil zéta en alliage d'aluminium A1 3103 de 12 mm d'épaisseur à l'état H1 de Rm = 250 MPa et de Re = 220 MPa et dans la couche n° 3 l'épaisseur du fil zéta en acier FM est portée à 6,4 mm.

Dans ces conditions, les caractéristiques du flexible sont les suivantes :

Exemple 8

| | Description | Rm MPa | KG/m | D.i. mm | Ep. mm |
|---|---|---|---|---|---|
| 1 | Zéta aluminium | | | | |
| | épaisseur : 12.0 mm | 250 | 18.6 | 203.2 | 12.0 |
| 2 | Gaine interne rilsan | | 4.6 | 227.2 | 6.0 |
| 3 | Zéta FM 15 épaisseur: 6.4mm | 780 | 32.7 | 239.2 | 6.4 |
| 4 | Gaine interne rilsan | | 5.1 | 252.0 | 6.0 |
| 5 | Armures à 35° FM15 | | | | |
| | épaisseur: 2.5 mm | 780 | 30.6 | 264.0 | 5.0 |
| 6 | Ruban | | 0.5 | 274.0 | 0.75 |
| 7 | Gaine externe rilsan | | 6.5 | 275.6 | 7.0 |

| Caractéristiques | Unité anglaise | Unité métrique |
|---|---|---|
| Diamètre interne | 8.00 in | 203.20 mm |
| Diamètre externe | 11.40 in | 289.50 mm |
| Volume interne | 0.349 cf/ft | 32.43 l/m |
| Volume externe | 0.709 cf/ft | 65.82 l/m |
| Poids vide dans l'air | 66.2 lb/ft | 98.5 kg/m |
| Poids plein d'eau de mer dans l'air | 88.6 lb/ft | 131.8 kg/m |
| Poids vide dans l'eau de mer | 21.1 lb/ft | 31.3 kg/m |
| Poids plein d'eau de mer dans l'eau de mer | 43.4 lb/ft | 64.5 kg/m |
| Facteur de flottabilité vide dans l'eau de mer | | 1.46 |
| Pression d'éclatement | 5428 psi | 374 bars |
| Pression de collapse | 1768 psi | 122 bars |
| Limite d'endommagement en traction | 391 495 lbs | 174 169 daN |
| Profondeur de pose théorique | | 2 700 m |

On constate que pour une pression d'éclatement identique à celle du flexible de l'exemple n° 1, l'utilisation d'une carcasse interne en fil zéta de 12 mm en alliage d'aluminium a permis de porter la pression de collapse à 122 bars et que l'on a réalisé un allègement de 18,8 % et que la profondeur de pose théorique est de 2697 mètres.

L'alliage A1 3103 peut être remplacé par tout autre alliage des séries 1000, 2000, 3000, 4000, 5000, 6000 et 7000.

**Exemple n° 9 :**

On réalise un flexible 8″ identique à celui de l'exemple n° 1 mais l'on remplace, dans la couche n° 3 le fil zéta 6,2 mm en acier FM15 par un fil zéta de 10 mm d'épaisseur en alliage 2017 à l'état T4 ayant subi un écrouissage final de 10 % et ayant comme caractéristiques Rm = 510 MPa, A = 8 %. L'on remplace aussi, dans la couche 4 les armures en acier FM15 par des armures de 4 mm d'épaisseur en alliage d'aluminium 6061 à l'état T9 avec un écrouissage final de 8 % après revenu et de Rm = 450 MPa et A = 6 %.

Le flexible ainsi constitué présente les caractéristiques suivantes :

Exemple 9

| Description | Rm MPa | KG/m | D.i. mm | Ep. mm |
|---|---|---|---|---|
| 1 Carcasse en feuillard inox | | | | |
| 304  80 X 2 mm | 540 | 31.0 | 203.2 | 10.0 |
| 2 Gaine interne rilsan | | 4.9 | 223.2 | 6.0 |
| 3 Zéta aluminium | | | | |
| épaisseur: 10.0 mm | 510 | 17.4 | 235.2 | 10.0 |
| 4 Gaine interne rilsan | | 5.1 | 255.2 | 6.0 |
| 5 Armures à 35° aluminium | | | | |
| épaisseur: 4.0 mm | 450 | 17.1 | 267.2 | 8.0 |
| 6 Ruban | | 0.5 | 283.2 | 0.75 |
| 7 Gaine externe rilsan | | 6.7 | 284.7 | 7.0 |

| Caractéristiques | Unité anglaise | Unité métrique |
|---|---|---|
| Diamètre interne | 8.00 in | 203.20 mm |
| Diamètre externe | 11.76 in | 298.70 mm |
| Volume interne | 0.379 cf/ft | 35.18 l/m |
| Volume externe | 0.704 cf/ft | 70.07 l/m |
| Poids vide dans l'air | 55.6 lb/ft | 82.7 kg/m |
| Poids plein d'eau de | | |
| mer dans l'air | 79.8 | 118.7 kg/m |
| Poids vide dans l'eau de mer | 7.3 lb/ft | 10.8 kg/m |
| Poids plein d'eau de mer dans | | |
| l'eau de mer | 31.5 lb/ft | 46.9 kg/m |
| Facteur de flottabilité vide | | |
| dans l'eau de mer | | 1.15 |
| Pression d'éclatement | 5386 psi | 371 bars |
| Pression de collapse | 1570 psi | 108 bars |
| Limite d'endommagement | | |
| en traction | 315 318 lbs | 157.813 daN |
| Profondeur de pose théorique | | 3 365 m |

On constate que l'utilisation, au niveau de la couche n° 3 et de la couche n° 4 d'alliages d'aluminium, permet, pour des performances identiques, de réaliser un gain de poids par rapport au flexible 1, de 41 % et la profondeur de pose théorique passe de 2140 m à 2991 mètres.

**Exemple n° 10 :**

On réalise un flexible 8″ identique à celui de l'exemple n° 1, mais où l'on remplace l'acier FM15 par des alliages d'aluminium.

La carcasse interne en feuillard d'acier inoxydable AISI 304 est remplacé par une carcasse interne enfil

20

EP 0 372 041 B1

zéta 12 mm agrafé en alliage 6061 à l'état T4 puis écroui de 20 %, de Rm = 350 MPa et Re = 320 MPa, dans la couche n° 3 le fil zéta 6,2 mm en acier FM15 est remplacé par un fil zéta de 10 mm d'épaisseur en alliage 2017 à l'état T3 écroui de 15 % avant trempe (Rm = 510) et dans la couche n° 4 les fils d'armures acier sont remplacés par des fils d'armure de 4 mm d'épaisseur en alliage 2017 dans le même état que le fil zéta de la couche 3.

Les caractéristiques du flexible ainsi obtenu sont les suivantes :

Exemple 10

| | Description | Rm MPa | KG/m | D.i. mm | Ep. mm |
|---|---|---|---|---|---|
| 1 | Zéta aluminium épaisseur : 12.0 mm | 350 | 18.6 | 203.2 | 12.0 |
| 2 | Gaine interne rilsan | | 4.6 | 227.2 | 6.0 |
| 3 | Zéta aluminium épaisseur: 10 mm | 510 | 17.7 | 239.2 | 10.0 |
| 4 | Gaine interne rilsan | | 5.2 | 259.2 | 6.0 |
| 5 | Armures à 35° aluminium épaisseur: 4.0 mm | 510 | 17.3 | 271.2 | 8.0 |
| 6 | Ruban | | 0.5 | 287.2 | 0.75 |
| 7 | Gaine externe rilsan | | 6.8 | 288.7 | 7.0 |

| Caractéristiques | Unité anglaise | Unité métrique |
|---|---|---|
| Diamètre interne | 8.00 in | 203.20 mm |
| Diamètre externe | 11.92 in | 302.70 mm |
| Volume interne | 0.349 cf/ft | 32.43 l/m |
| Volume externe | 0.775 cf/ft | 71.96 l/m |
| Poids vide dans l'air | 42.4 lb/ft | 70.6 kg/m |
| Poids plein d'eau de mer dans l'air | 69.8 lb/ft | 103.9 kg/m |
| Poids vide dans l'eau de mer | -2.1 lb/ft | -3.1 kg/m |
| Poids plein d'eau de mer dans l'eau de mer | 20.2 lb/ft | 30.1 kg/m |
| Facteur de flottabilité vide dans l'eau de mer | | 0.96 |
| Pression d'éclatement | 5500 psi | 370 bars |
| Pression de collapse | 1768 psi | 122 bars |
| Limite d'endommagement en traction | 417 895 lbs | 185 915 daN |
| Profondeur de pose théorique | | 6 176 m |

21

On constate que sur ce flexible qui a la même pression d'éclatement que le flexible n° 1, on a obtenu un allègement de 62,1 %, la pression de collapse est supérieure à 122 bars et la profondeur théorique de pose atteint 6176 mètres.

**Exemple n° 11 :**

On réalise un flexible identique à celui de l'exemple n° 10, mais l'on remplace, dans la couche n° 1, le fil zéta 12 mm par un fil zéta de 14 mm d'épaisseur.
Les caractéristiques du flexible ainsi obtenu sont les suivantes :

```
                        Exemple 11


              Description        Rm MPa   KG/m    D.i. mm  Ep. mm
        1  Zéta aluminium

           épaisseur : 14.0 mm     350    21.2     203.2    14.0
        2  Gaine interne rilsan            4.6     231.2     6.0
```

| | | | | |
|---|---|---|---|---|
| 3  Zéta aluminium | | | | |
| épaisseur: 10 mm | 510 | 17.9 | 243.2 | 10 |
| 4  Gaine interne rilsan | | 5.3 | 263.2 | 6.0 |
| 5  Armures à 35° aluminium | | | | |
| épaisseur: 4.0 mm | 510 | 17.7 | 275.2 | 8.0 |
| 6  Ruban | | 0.6 | 291.2 | 0.75 |
| 7  Gaine externe rilsan | | 6.9 | 292.7 | 7.0 |

| Caractéristiques | Unité anglaise | Unité métrique |
|---|---|---|
| Diamètre interne | 8.00 in | 203.20 mm |
| Diamètre externe | 12.07 in | 306.70 mm |
| Volume interne | 0.349 cf/ft | 32.43 l/m |
| Volume externe | 0.795 cf/ft | 73.88 l/m |
| Poids vide dans l'air | 49.8 lb/ft | 74.1 kg/m |
| Poids plein d'eau de mer dans l'air | 72.1 lb/ft | 107.4 kg/m |
| Poids vide dans l'eau de mer | -1.1 lb/ft | -1.6 kg/m |
| Poids plein d'eau de mer dans l'eau de mer | 21.2 lb/ft | 31.6 kg/m |
| Facteur de flottabilité vide dans l'eau de mer | | 0.98 |
| Pression d'éclatement | 5413 psi | 370 bars |
| Pression de collapse | 2724 psi | 188 bars |
| Limite d'endommagement en traction | 427 166 lbs | 190 038 daN |
| Profondeur de pose théorique | | 6 013 m |

On constate que par rapport au flexible de l'exemple n° 10, la pression de collapse est fortement augmentée 188 bars contre 122, par rapport au flexible de l'exemple n° 1, le gain de poids est de 60,2 % et la profondeur de pose théorique est de 6013 mètres.

**Exemple n° 12 :**

On réalise un flexible identique à celui de l'exemple n° 11, mais l'on remplace, dans la couche n° 1, le fil zéta de 14 mm d'épaisseur par un fil zéta de 16 mm d'épaisseur.

Dans ces conditions, le flexible a les caractéristiques suivantes :

EP 0 372 041 B1

Tableau 12

| Description | Rm MPa | KG/m | D.i. mm | Ep. mm |
|---|---|---|---|---|
| 1  Zéta aluminium | | | | |
| épaisseur : 16.0 mm | 350 | 24.8 | 203.2 | 16.0 |
| 2  Gaine interne rilsan | | 4.7 | 235.7 | 6.0 |
| 3  Zéta aluminium | | | | |
| épaisseur: 10 mm | 510 | 18.2 | 247.2 | 10 |
| 4  Gaine interne rilsan | | 5.4 | 267.6 | 6.0 |
| 5  Armures à 35° aluminium | | | | |
| épaisseur: 4.0 mm | 510 | 17.9 | 279.2 | 8.0 |
| 6  Ruban | | 0.6 | 295.2 | 0.75 |
| 7  Gaine externe rilsan | | 6.9 | 296.7 | 7.0 |

| Caractéristiques | Unité anglaise | Unité métrique |
|---|---|---|
| Diamètre interne | 8.00 in | 203.20 mm |
| Diamètre externe | 12.23 in | 310.70 mm |
| Volume interne | 0.349 cf/ft | 32.43 l/m |
| Volume externe | 0.816 cf/ft | 75.82 l/m |
| Poids vide dans l'air | 52.8 lb/ft | 78.50 kg/m |
| Poids plein d'eau de mer dans l'air | 75.1 lb/ft | 111.7 kg/m |
| Poids vide dans l'eau de mer | +0.5 lb/ft | +0.8 kg/m |
| Poids plein d'eau de mer dans l'eau de mer | 22.9 lb/ft | 34.0 kg/m |
| Facteur de flottabilité vide dans l'eau de mer | | 1.01 |
| Pression d'éclatement | 5365 psi | 370 bars |
| Pression de collapse | 3974 psi | 274 bars |
| Limite d'endommagement en traction | 427 483 lbs | 190 180 daN |
| Profondeur de pose théorique | | 5 593 m |

On constate que par rapport à l'exemple n° 11, la pression de collapse est fortement augmentée 274 bars contre 188 et 108 bars dans le cas du flexible de l'exemple n° 1. Par rapport au flexible de l'exemple n° 1, le gain de poids est de 57,2 % et la profondeur théorique de pose et de 5593 mètres.

**Exemple n° 13 :**

On réalise un flexible identique à celui de l'exemple n° 1, mais l'on remplace, dans la couche n° 3 le fil zéta en 6,2 mm d'épaisseur en acier FM15 par un fil zéta de 10 mm d'épaisseur en alliage d'aluminium 2017 ayant comme caractéristiques mécaniques Rm = 500 MPa et A = 9 %.

24

EP 0 372 041 B1

L'on remplace aussi les armures en acier FM15 par des armures de 6 mm d'épaisseur en composite à matrice organique et à renfort de fibres de verre ayant comme caractéristiques mécaniques Rm = 2500 MPa. Le flexible ainsi constitué a les caractéristiques suivantes :

Exemple 13

| | Description | Rm MPa | KG/m | D.i. mm | Ep. mm |
|---|---|---|---|---|---|
| 1 | Carcasse en feuillard inox | | | | |
| | 304  80 X 2 mm | 540 | 31 | 203.2 | 10.0 |
| 2 | Gaine interne rilsan | | 4.9 | 223.2 | 6.0 |
| 3 | Zéta aluminium | | | | |
| | épaisseur: 10 mm | 500 | 17.4 | 235.2 | 10.0 |
| 4 | Gaine interne rilsan | | 5.1 | 255.2 | 6.0 |
| 5 | Armures à 35° composite | | | | |
| | épaisseur: 6.0 mm | 2500 | 15.8 | 267.2 | 12.0 |
| 6 | Ruban | | 0.6 | 291.2 | 0.75 |
| 7 | Gaine externe rilsan | | 6.9 | 292.7 | 7.0 |

| Caractéristiques | Unité anglaise | Unité métrique |
|---|---|---|
| Diamètre interne | 8.00 in | 203.20 mm |
| Diamètre externe | 12.07 in | 306.70 mm |
| Volume interne | 0.379 cf/ft | 35.18 l/m |
| Volume externe | 0.795 cf/ft | 73.88 l/m |
| Poids vide dans l'air | 54.8 lb/ft | 81.6 kg/m |
| Poids plein d'eau de mer dans l'air | 79.1 lb/ft | 117.6 kg/m |
| Poids vide dans l'eau de mer | 3.9 lb/ft | 5.9 kg/m |
| Poids plein d'eau de mer dans l'eau de mer | 28.2 lb/ft | 41.9 kg/m |
| Facteur de flottabilité vide dans l'eau de mer | | 1.08 |
| Pression d'éclatement | 5365 psi | 370 bars |
| Pression de collapse | 1570 psi | 108 bars |
| Limite d'endommagement en traction | 1 061 829 lbs | 472 301 daN |
| Profondeur de pose théorique | | 11 272 m |

Par rapport au flexible de l'exemple n° 1, pour des caractéristiques de pression d'éclatement et de pression de collapse identiques, on a réalisé un allègement de 47 % et la profondeur de pose théorique dépasse 10 000 mètres.

25

**Revendications**

1. - Conduite flexible armée comportant un ou plusieurs des composants suivants, une armure de résistance à la pression (3), une armure de résistance à la traction (5) et/ou une carcasse interne (1), caractérisée en ce qu'au moins l'un desdits composants comporte un ou plusieurs éléments allongés tel un profilé, un câble, un fil ou un feuillard, ledit élément ayant subi une opération de corroyage et étant composé d'un alliage d'aluminium des séries 2000, 5000, 6000 ou 7000, ledit alliage d'aluminium ayant une résistance à la rupture en traction (Rm) au moins égale à 250 MPa et une limite élastique à 0,2 % $Re_{0,2}$ au moins égale à 190 MPa, et en ce que ledit corroyage comporte un écrouissage à froid ayant un taux de 3 % au moins dans le cas d'utilisation d'un alliage d'aluminium des séries 2000, 6000, 7000, ou un taux de 20 % au moins dans le cas d'utilisation d'un alliage d'aluminium de la série 5000.

2. - Conduite selon la revendication 1 comportant une armure de résistance à la pression (3) et/ou une armure de résistance à la traction (5), caractérisée en ce qu'au moins l'une desdites armures comporte au moins un élément allongé composé d'un alliage aluminium dans l'une des nuances suivantes : 2014, 2017, 2024, 2117, 2618, 5050, 5052, 5056, 5082, 5086, 5154, 5183, 5754, 6005, 6060, 6061, 6063, 6066, 6070, 6082, 6351, 7001, 7020, 7049, 7050, 7075, 7175, 7178 ou 7475.

3. - Conduite selon l'une des revendications 1 à 2, caractérisée en ce que ledit élément allongé en alliage d'aluminium a une résistance à la rupture en traction (Rm) au moins égale à 300 PMa et de préférence au moins à 350 MPa.

4. - Conduite selon la revendication 1, comportant une carcasse interne (1), caractérisée en ce que ladite carcasse comporte au moins un élément allongé composé d'un alliage aluminium dans l'une des nuances : 5050, 5052, 5056, 5083, 5456, 6060, 6061, 6082, 6083 ou 6106.

5. - Conduite selon l'une des revendications précédentes, caractérisée en ce qu'elle comporte une carcasse interne comportant au moins un élément allongé composé d'un alliage d'aluminium, ledit élément allongé étant un profilé ou un fils emboîtable ou agrafable.

6. - Conduite selon la revendication 5, caractérisé en ce que ledit élément allongé est du type "Zéta" (9).

7. - Conduite selon l'une des revendications précédentes, caractérisée en ce que ledit alliage d'aluminium a subi un traitement thermique de mise en solution séparée.

8. - Conduite selon l'une des revendications précédentes, caractérisée en ce que ledit élément allongé comportant ledit alliage d'aluminium a subi l'opération d'écrouissage en traitement final précédée ou/et suivie d'un revenu.

9. - Conduite selon la revendication 1, caractérisée en ce que ledit écrouissage à froid a un taux compris entre 3 et 40 % et de préférence entre 5 et 25 % dans le cas d'utilisation d'un alliage d'aluminium des séries 2000, 6000 ou 7000.

10. - Conduite selon la revendication 1, caractérisée en ce que ledit écrouissage à froid a un taux compris entre 20 et 90 % et de préférence entre 40 et 70 % dans le cas d'utilisation d'un alliage d'aluminium de la série 5000.

11. - Conduite selon l'une des revendications précédentes, caractérisée en ce que ledit élément allongé a subi un laminage ou un étirage.

12. - Conduite selon la revendication 11, caractérisée en ce que ledit élément allongé a subi un recuit partiel ou total ou une opération de trempe revenue dont les paramètres caractéristiques sont fonction dudit taux d'écrouissage et/ou de la nature de l'alliage.

13. - Conduite selon l'une des revendications précédentes, caractérisée en ce que ledit composant comportant l'aluminium est recouvert d'un alliage de protection contre la corrosion.

14. - Conduite selon l'une des revendications précédentes, caractérisée en ce que ledit composant comportant de l'aluminium est recouvert d'un film thermoplastique, tel notamment un polyethylène, un polyamide, un PVDF ou un polypropylène, ou d'un élastomère ou d'un caoutchouc.

15. - Conduite selon l'une des revendications précédentes, caractérisée en ce que ledit composant comportant de l'aluminium a une ductilité au moins égale à 3 %.

16. - Conduite selon la revendication 15, caractérisée en ce que ledit composant comportant de l'aluminium dans les séries 2000 ou 7000 a une ductilité comprise entre 6 et 20 % et de préférence entre 10 et 20 %.

17. - Conduite selon la revendication 15, caractérisée en ce que ledit composant comportant de l'aluminium dans les séries 5000 ou 6000 a une ductilité au moins égale à 6 %.

18. - Conduite selon l'une des revendications précédentes comportant une carcasse, une gaine et une armure, ladite carcasse comportant un feuillard agrafé ou un fils agrafé notamment un zéta, et ladite armure comportant un élément qui est un profilé, un câble ou fils, caractérisée en ce que ledit feuillard ou fils agrafé de ladite carcasse et/ou ledit élément allongé de ladite armure comporte un alliage d'aluminium.

19. - Conduite selon la revendication 18, caractérisée en ce qu'elle comporte une carcasse constituée d'un feuillard ou un fils agrafé en acier.

20. - Conduite selon la revendication 18, caractérisée en ce que ladite armure comporte de l'acier.

21. - Conduite selon la revendication 2, caractérisée en ce que ladite armure de résistance à la traction comporte essentiellement de l'acier et ladite armure de résistance à la pression comporte essentiellement un alliage d'aluminium.

22. - Conduite selon la revendication 21, caractérisée en ce qu'elle comporte une gaine anti-frottement, et de préférence qui est étanche et isolante électriquement, entre l'armure de résistance à la pression et l'armure de résistance à la traction.

23. - Conduite selon l'une des revendications 21 ou 22, caractérisée en ce qu'elle comporte une armure de résistance a la traction comportant au moins deux couches de fils, câble ou profilé et en ce qu'elle comporte une couche ou gaine de matériau anti-frottement intercalée entre au moins lesdites deux couches.

24. - Conduite selon la revendication 2, caractérisée en ce que ladite armure de résistance à la traction et ladite armure de résistance à la pression comportent essentiellement un alliage d'aluminium.

25. - Conduite selon l'une des revendications précédentes, caractérisée en ce qu'elle comporte un feuillard externe ou du fils agrafable externe, comportant éventuellement de l'aluminium.

26. - Conduite selon l'une des revendications précédentes, caractérisée en ce qu'elle comporte au moins une gaine interne comportant un matériau plastique, tel qu'un polyamide, qu'un PVDF, ou un matériau élastique tels que les caoutchoucs ou élastomères synthètiques.

27. - Conduite selon l'une des revendications précédentes, caractérisée en ce qu'elle comporte une armure de résistance à la pression comportant au moins une nappe formée à partir d'un profilé ayant éventuellement une section à forme emboitable, tel un zéta, un "U", réalisé à partir d'un alliage d'aluminium.

28. - Conduite selon l'une des revendications précédentes, caractérisée en ce qu'il comporte un matériau composite à matrice organique.

**Patentansprüche**

1. Bewehrte flexible Leitung, die einen oder mehrere der folgenden Bestandteile aufweist: eine druckbeständige Bewehrung (3), eine zugbeständige Bewehrung (5) und/oder eine innere Karkasse (1), dadurch gekennzeichnet, daß mindestens einer dieser Bestandteile ein oder mehrere längliche Elemente, wie ein Profil, ein kabel, einen Draht oder ein Band, aufweist, wobei dieses Element einem Zurichten (corroyage) unterzogen worden ist und besteht aus einer Aluminiumlegierung der Reihen 2000, 5000, 6000 oder 7000, wobei diese Aluminiumlegierung eine Zugfestigkeit (Rm) von mindestens 250 MPa und eine 0,2 % Dehngrenze ($Re_{0,2}$) von mindestens 190 MPa hat und das Zurichten umfaßt eine Kaltverformung in einem Umfang von mindestens 3 % im Falle der Verwendung einer Aluminiumlegierung der Reihen 2000, 6000, 7000 oder in einem Umfange von mindestens 20 % im Falle der Verwendung einer Aluminiumlegierung der Reihe 5000.

2. Leitung nach Anspruch 1, die eine druckbeständige Bewehrung (3) und/oder eine zugbeständige Bewehrung (5) aufweist, dadurch gekennzeichnet, daß mindestens eine dieser Bewehrungen mindestens ein längliches Element aufweist, das besteht aus einer Aluminiumlegierung einer der folgenden Sorten: 2014, 2017, 2024, 2117, 2618, 5050, 5052, 5056, 5082, 5086, 5154, 5183, 5754, 6005, 6060, 6061, 6063, 6066, 6070, 6082, 6351, 7001, 7020, 7049, 7050, 7075, 7175, 7178 oder 7475.

3. Leitung nach einem der Ansprüche 1 bis 2, dadurch gekennzeichnet, daß das langgestreckte Element aus einer Aluminiumlegierung eine Zugfestigkeit (Rm) von mindestens 300 MPa und vorzugsweise mindestens 350 MPa hat.

4. Leitung nach Anspruch 1, die eine innere Karkasse aufweist, dadurch gekennzeichnet, daß diese Karkasse mindestens ein langgestrecktes Element aufweist, das besteht aus einer Aluminiumlegierung einer der folgenden Sorten: 5050, 5052, 5056, 5083, 5456, 6060, 6061, 6082, 6083 oder 6106.

5. Leitung nach einem der vorhergehenden Ansprüche, dadurch gekennzeichnet, daß sie eine innere Karkasse mit mindestens einem länglichen Element aus einer Aluminiumlegierung aufweist, wobei dieses längliche Element ein einsteckbares oder verhakbares Profil oder Draht ist.

6. Leitung nach Anspruch 5, dadurch gekennzeichnet, daß das längliche Element vom "Zeta"-Typ (9) ist.

7. Leitung nach einem der vorhergehenden Ansprüche, dadurch gekennzeichnet, daß die Aluminiumlegierung einer getrennten thermischen Lösungsbehandlung unterzogen worden ist.

8.  Leitung nach einem der vorhergehenden Ansprüche, dadurch gekennzeichnet, daß das längliche Element aus der Aluminiumlegierung bei der Schlußbehandlung einem Nachwalzen (Dressieren) unterworfen worden ist, dem ein Anlassen (Vergüten) vorausgeht und/oder folgt.

9.  Leitung nach Anspruch 1, dadurch gekennzeichnet, daß die Kaltverformung in einem Umfang zwischen 3 und 40 %, vorzugsweise zwischen 5 und 25 %, erfolgt im Falle der Verwendung einer Aluminiumlegierung der Reihen 2000, 6000 oder 7000.

10. Leitung nach Anspruch 1, dadurch gekennzeichnet, daß die Kaltverformung in einem Umfang zwischen 20 und 90 %, vorzugsweise zwischen 40 und 70 %, erfolgt im Falle der Verwendung einer Aluminiumlegierung der Reihe 5000.

11. Leitung nach einem der vorhergehenden Ansprüche, dadurch gekennzeichnet, daß das längliche Element einem Walzen oder Ziehen unterworfen worden ist.

12. Leitung nach Anspruch 11, dadurch gekennzeichnet, daß das längliche Element einer partiellen oder vollständigen Glühung oder einer Vergütungsglühung unterworfen worden ist, deren charakteristische Parameter eine Funktion des Umfanges der Kaltverformung und/oder der Art der Legierung sind.

13. Leitung nach einem der vorhergehenden Ansprüche, dadurch gekennzeichnet, daß der das Aluminium enthaltende Bestandteil von einer Schutzlegierung gegen Korrosion bedeckt ist.

14. Leitung nach einem der vorhergehenden Ansprüche, dadurch gekennzeichnet, daß der das Aluminium enthaltende Bestandteil von einem thermoplastischen Film, insbesondere aus einem Polyethylen, einem Polyamid, einem PVDF oder einem Polypropylen oder von einem Elastomeren oder einem Kautschuk bedeckt ist.

15. Leitung nach einem der vorhergehenden Ansprüche, dadurch gekennzeichnet, daß der das Aluminium enthaltende Bestandteil eine Duktilität von mindestens 3 % hat.

16. Leitung nach Anspruch 15, dadurch gekennzeichnet, daß der das Aluminium der Reihen 2000 oder 7000 enthaltende Bestandteil eine Duktilität zwischen 6 und 20 %, vorzugsweise zwischen 10 und 20 %, hat.

17. Leitung nach Anspruch 15, dadurch gekennzeichnet, daß der das Aluminium der Reihen 5000 oder 6000 enthaltende Bestandteil eine Duktilität von mindestens 6 % hat.

18. Leitung nach einem der vorhergehenden Ansprüche, die eine Karkasse, eine Umhüllung und eine Bewehrung aufweist, wobei die Karkasse ein insbesondere in Zeta-Form verhaktes Band oder verhakten Draht aufweist und die Bewehrung ein Element aufweist, das ein Profil, ein Kabel oder ein Draht ist, dadurch gekennzeichnet, daß das verhakte Band oder Draht der Karkasse und/oder das längliche Element der Bewehrung eine Aluminiumlegierung aufweist.

19. Leitung nach Anspruch 18, dadurch gekennzeichnet, daß sie eine Karkasse aufweist, die aus einem verhakten Stahlband oder Stahldraht besteht.

20. Leitung nach Anspruch 18, dadurch gekennzeichnet, daß die Bewehrung Stahl aufweist.

21. Leitung nach Anspruch 2, dadurch gekennzeichnet, daß die zugbeständige Bewehrung im wesentlichen Stahl aufweist und daß die druckbeständige Bewehrung im wesentlichen eine Aluminiumlegierung aufweist.

22. Leitung nach Anspruch 21, dadurch gekennzeichnet, daß sie eine Antireibungs-Umhüllung, die vorzugsweise dicht und elektrisch isolierend ist, zwischen der druckbeständigen Bewehrung und der zugbeständigen Bewehrung aufweist.

23. Leitung nach einem der Ansprüche 21 oder 22, dadurch gekennzeichnet, daß sie eine zugbeständige Bewehrung mit mindestens zwei Draht-, Kabel- oder Profil-Schichten und eine Schicht oder Umhüllung aus einem Antireibungs-Material, die mindestens zwischen diesen beiden Schichten angeordnet ist, aufweist.

28

EP 0 372 041 B1

**24.** Leitung nach Anspruch 2, dadurch gekennzeichnet, daß die zugbeständige Bewehrung und die druckbeständige Bewehrung im wesentlichen eine Aluminiumlegierung umfassen.

**25.** Leitung nach einem der vorhergehenden Ansprüche, dadurch gekennzeichnet, daß sie ein verhakbares äußeres Band oder einen verhakbaren äußeren Draht aufweist, die gegebenenfalls Aluminium umfassen.

**26.** Leitung nach einem der vorhergehenden Ansprüche, dadurch gekennzeichnet, daß sie mindestens eine innere Umhüllung aus einem plastischen Material, wie z.B. einem Polyamid, einem PVDF oder einem elastischen Material, wie Kautschuken oder synthetischen Elastomeren, aufweist.

**27.** Leitung nach einem der vorhergehenden Ansprüche, dadurch gekennzeichnet, daß sie eine druckbeständige Bewehrung mit mindestens einer Lage (Mantel) aufweist, die gebildet ist aus einem Profil, das gegebenenfalls einen Querschnitt mit einer verhak- bzw. einsteckbaren Form, wie z.B. einer Zeta- oder "U"-Form hat, die aus einer Aluminiumlegierung hergestellt ist.

**28.** Leitung nach einem der vorhergehenden Ansprüche, dadurch gekennzeichnet, daß sie ein Verbundmaterial mit einer organischen Matrix aufweist.

**Claims**

1) A reinforced hose comprising one or several of the following components, a pressure-resistance reinforcement (3), a tensile-strength reinforcement (5) and/or an inner carcass (1), wherein at least one of said components comprises one or several elongated elements such as a profile, a cable, a wire or a strip, said element being subjected to a working operation and being composed of an aluminum alloy of the 2000, 5000, 6000 or 7000 series, said aluminum alloy having an ultimate tensile strength (Rm) at least equal to 250 MPa and a yield strength at 0.2 % $Re_{0.2}$ at least equal to 190 MPa, and wherein said working operation comprises a cold work-hardening of 3 % at least when the aluminum alloy is a 2000, 6000, 7000 series aluminum alloy, or of 20 % at least when the aluminum alloy is a 5000 series aluminum alloy.

2) A hose as claimed in claim 1, comprising a pressure-resistance reinforcement (3) and/or a tensile-strength reinforcement (5), wherein at least one of said reinforcements comprises at least one elongated element composed of an aluminum alloy of one of the following grades : 2014, 2017, 2024, 2117, 2618, 5050, 5052, 5056, 5082, 5086, 5154, 5183, 5754, 6005, 6060, 6061, 6063, 6066, 6070, 6082, 6351, 7001, 7020, 7049, 7050, 7075, 7175, 7178 or 7475.

3) A hose as claimed in any one of claims 1 to 2, wherein said elongated element made of aluminum alloy has an ultimate tensile strength (Rm) at least equal to 300 MPa and preferably at least equal to 350 MPa.

4) A hose as claimed in claim 1, comprising an inner carcass (1), wherein said carcass comprises at least one elongated element composed of an aluminum alloy in one of the following grades : 5050, 5052, 5056, 5083, 5456, 6060, 6061, 6082, 6083 or 6106.

5) A hose as claimed in any one of the previous claims, comprising an inner carcass, wherein said carcass comprises at least one elongated element composed of an aluminum alloy, said elongated element being a profile or an interlockable or clippable wire.

6) A hose as claimed in claim 5, wherein said elongated element is of the Zeta type (9).

7) A hose as claimed in any one of the previous claims, wherein said aluminum alloy is subjected to a dissolution heat treatment.

8) A hose as claimed in any one of the previous claims, wherein said elongated element comprising said aluminum alloy is subjected to a work-hardening operation as a final treatment preceded and/or followed by tempering.

9) A hose as claimed in claim 1, wherein said cold work-hardening is in a range of between 3 and 40 % and preferably between 5 and 25 % when the aluminum alloy is a 2000, 6000 or 7000 series aluminum alloy.

10) A hose as claimed in claim 1, wherein said cold work-hardening is in a range of between 20 and 90 % and preferably between 40 and 70 % when the aluminum alloy is a 5000 series aluminum alloy.

11) A hose as claimed in any one of the previous claims, wherein said elongated element is a rolled element or a drawn element.

12) A hose as claimed in claim 11, wherein said elongated element is a totally or partially annealed or hardened-tempered element whose characteristic parameters depend on said work-hardening rate and/or on the nature of the alloy.

13) A hose as claimed in any one of the previous claims, wherein said component comprising aluminum

29

is coated with an alloy for protection against oxidation.

14) A hose as claimed in any one of the previous claims, wherein said component comprising aluminum is coated with a thermoplastic film, notably of one of polyethylene, polyamide, PVDF, polypropylene, an elastomer or a rubber.

15) A hose as claimed in any one of the previous claims, wherein said component comprising aluminum has a ductility of at least 3 %.

16) A hose as claimed in claim 15, wherein said component comprising aluminum from the 2000 or 7000 series has a ductility of between 6 and 20 % and preferably between 10 and 20 %.

17) A hose as claimed in claim 15, wherein said component comprising aluminum from the 5000 or 6000 series has a ductility of at least 6 %.

18) A hose as claimed in any one of the previous claims, comprising a carcass, a sheath and a reinforcement, said carcass comprising a clipped strip or a clipped wire, notably a Zeta, and said reinforcement comprising an element which is a profile, a cable or a wire, wherein said clipped strip or wire of said carcass and/or said elongated element of said reinforcement comprises an aluminum alloy.

19) A hose as claimed in claim 18, comprising a carcass consisting of a clipped steel strip or wire.

20) A hose as claimed in claim 18, wherein said reinforcement comprises steel.

21) A hose as claimed in claim 2, wherein said tensile-strength reinforcement essentially consists of steel and said pressure-resistance reinforcement essentially consists of an aluminum alloy.

22) A hose as claimed in claim 21, comprising an anti- friction sheath, which is preferably a sealing and an electrically insulating sheath, between the pressure-resistance reinforcement and the tensile-strength reinforcement.

23) A hose as claimed in any one of claims 21 or 22, comprising a tensile-strength reinforcement including at least two layers formed as one of wires, a cable or a profile wherein a layer or sheath of anti-friction material is interposed between at least said two layers.

24) A hose as claimed in claim 2, wherein said tensile-strength reinforcement and said pressure-resistance reinforcement essentially comprise an aluminum alloy.

25) A hose as claimed in any one of the previous claims, comprising an outer strip or an outer clippable wire, possibly comprising aluminum.

26) A hose as claimed in any one of the previous claims, comprising at least one inner sheath comprising a plastic material, of one of polyamide, PVDF, or an elastic material such as synthetic rubbers or elastomers.

27) A hose as claimed in any one of the previous claims, comprising a pressure-resistance reinforcement including at least one ply made from a profile possibly having an interlockable shaped section, such as a Zeta, or a U-shaped cross section, formed from an aluminum alloy.

28) A hose as claimed in any one of the previous claims, comprising an organic matrix composite material.

**FIG.1**

**FIG.2**

**FIG.3**

**FIG.4**